(19) Europäisches Patentamt

European Patent Office

Office européen des brevets

(11) **EP 1 036 762 A1**

(12) **EUROPEAN PATENT APPLICATION**
published in accordance with Art. 158(3) EPC

(43) Date of publication:
20.09.2000 Bulletin 2000/38

(51) Int. Cl.$^7$: **C01B 31/30**, C21B 15/00

(21) Application number: 98954809.4

(86) International application number:
PCT/JP98/05281

(22) Date of filing: 24.11.1998

(87) International publication number:
WO 99/28235 (10.06.1999 Gazette 1999/23)

(84) Designated Contracting States:
AT DE GB

(30) Priority: 04.12.1997 JP 33422797

(71) Applicants:
• **Kawasaki Jukogyo Kabushiki Kaisha**
**Kobe-shi, Hyogo 650-8670 (JP)**
• **MITSUBISHI CORPORATION**
**Tokyo 100-8086 (JP)**

(72) Inventors:
• **MIYASHITA, Torakatsu**
**Kobe-shi, Hyogo 654-0152 (JP)**

• **KISHIMOTO, Mitsuharu**
**Kako-gun, Hyogo 675-0151 (JP)**
• **NAKAZAWA, Teruyuki**
**Koganei-shi, Tokyo 184-0011 (JP)**
• **NIO, Akio**
**Kiyose-shi, Tokyo204-0022 (JP)**

(74) Representative:
**West, Alan Harry et al**
**R.G.C. Jenkins & Co.**
**26 Caxton Street**
**London SW1H 0RJ (GB)**

(54) **METHOD OF MANUFACTURING IRON CARBIDE**

(57) An objective of the present invention is to provide a method for accelerating the generation of iron carbide, in which an iron-containing raw material is partially reduced in a first stage reaction process, and then the partially reduced iron-containing raw material is further reduced and carburized in a second stage reaction process to form the iron carbide.

For attaining the object, the partial reduction of the first stage reaction process is performed in fluidized bed reactor 19, and the further reduction and the carburization of the second stage reaction process is performed in fluidized bed reactor 39. Carbon or carbon-containing gas is added to the reaction gas of the fluidized bed reactor 39.

Fig.1

**Description**

[ Technical Field ]

The present invention relates to a method for producing a suitable raw material for iron making and steel making. More particularly, the present invention relates to a method for producing iron carbide, which is suitably used in an electric furnace and the like for steel making.

[ Background Art ]

The production of steel normally comprises the steps of converting iron ore into pig iron using a blast furnace and thereafter converting the pig iron into steel using an open hearth furnace or a converter. Such a traditional method requires large amounts of energy and large-scale equipment, and has a high cost. Therefore, for a small-scale steel making process, a method comprising the steps of directly converting iron ore into raw material(solid) used in the steel making furnace, and converting the raw material into molten steel using an electric furnace and the like has been used.
With respect to direct iron making process, a direct reduction process has been used to convert iron ore into reduced iron. However, the reduced iron produced by the direct reduction process is highly reactive and easily reacts with oxygen in the air to generate heat. Therefore, it is necessary to seal the reduced iron with an inert gas or by some other measures, during transportation and storage of the reduced iron. Accordingly, iron carbide containing a comparatively high iron content, and which has a low reaction activity and can be easily transported and stored, has recently been used as the raw material for steel making in an electric furnace and the like.
Furthermore, an iron making and steel making raw material containing iron carbide as the main component is not only easy to transport and store, but also has the advantage that the carbon combined with iron can be used as a source of fuel in an iron making or steel making furnace, and can be used as a source to generate microbubbles which accelerate the reaction in the steel making furnace. Therefore, the raw material for iron making and steel making containing iron carbide as the main component has recently attracted a special interest.
According to one conventional method for producing iron carbide, iron ore fines are fed into a fluidized bed reactor and are reacted with a gas mixture comprising a reducing gas (e.g., hydrogen gas) and a carburizing gas (e.g., methane gas and the like) at a predetermined temperature. Thus, iron oxide (e. g., hematite($Fe_2O_3$) magnetite($Fe_3O_4$), wustite(FeO), etc.) in iron ore is reduced and carburized in a single process. A single process means an operation performed by simultaneously introducing a reducing gas and a carburizing gas to a single reactor. This kind of prior art is disclosed in the publication 6-501 983 of Japanese translation of International Patent Application(PCT/US91/05198).
The process in which the reduction and the carburization is performed in a single process has the advantage that the apparatus is simple. However, since the composition of the reaction gas and the reaction temperature cannot be independently or flexibly set to optimize the respective reducing and carburizing reactions, the reaction cannot be efficiently proceeded. Accordingly, the present applicants have filed a patent application about the inventions relating to the method and apparatus for producing iron carbide, in which an iron- containing raw material for iron making is partially reduced in a first stage reaction process to form a partially reduced iron-containing raw material, then the partially reduced iron-containing raw material is further reduced and carburized in a second stage reaction process to form the iron carbide (refer to a publication of Japanese unexamined patent application 9-48604). According to the above inventions(9-48 604), the gas used in the first stage reaction process can be a composition which is optimized for only the reducing reaction, and the gas used in the second stage reaction process can be a composition which is optimized for the further reducing and carburizing reactions. Besides, in accordance with the above inventions(9-4 8604), it is also possible to utilize the variations and modifications for each stage reaction process which cannot be employed in a conventional process for producing iron carbide using a single process. Therefore, the process disclosed in the above patent application (9-48604) is flexible, and has the advantage that the reaction speed is further increased to shorten the reaction time, and the flow rate of the reducing and carburizing gases can be substantially decreased.
As described above, the process, in which the reaction is performed in two stages to produce iron carbide using the iron-containing raw material, has many advantages. Furthermore, it is possible to accelerate the reaction speed of the second stage reaction process depending on the gas composition used in the second stage reaction process. That is, if a reaction gas comprising methane as a predominant component is used as the reaction gas of the second stage reaction process, the basic reaction of the second stage reaction process, in which the partially reduced iron oxide in the first stage reaction process is further reduced and carburized, is stoichiometrically represented as shown in the following reaction formula (1).

$$3FeO_{2/3} + CH_4 \rightarrow Fe_3C + 2H_2O \qquad (1)$$

Water vapor is generated simultaneously with the production of iron carbide ($Fe_3C$) as shown in the above reaction formula (1). Accordingly, if the quantity of water vapor present in the reaction system is a little, it is possible to accelerate the production of iron carbide because the reaction in the formula (1) tends to process from the left side to the right side.

The present inventors has taken note of such feature of the reaction formula (1). An objective of the present invention is to provide a method for accelerating the production of iron carbide, in which an iron-containing raw material is partially reduced in a first stage reaction process, and subsequently, the partially reduced iron-containing raw material is further reduced and carburized in a second stage reaction process to form the iron carbide.

[ Disclosure of Invention ]

In order to accomplish the above objective, a method for producing iron carbide according to the present invention comprises adding carbon or carbon-containing gas to the reaction gas of the second stage reaction process, resulting in an increase in carbon potential within the reaction system (lowering the oxygen potential relatively) and an acceleration of the production of iron carbide.

That is, a first aspect of the present invention is to provide a method for producing iron carbide comprising partially reducing an iron-containing raw material in a first stage reaction process, and subsequently, further reducing and carburizing the partially reduced iron-containing raw material in a second stage reaction process to form the iron carbide, wherein said method is characterized by adding carbon or carbon-containing gas or the mixture thereof to a reaction gas of the second stage reaction process.

Another aspect of the present invention is to provide a method for producing iron carbide according to the first aspect of the present invention, in which carbon is charcoal fines or soot.

Further aspect of the present invention is to provide a method for producing iron carbide according to the first aspect of the present invention, in which carbon-containing gas is a coke oven gas, a blast furnace exhaust gas, an electric furnace exhaust gas, a melting reduction furnace exhaust gas, a converter exhaust gas or a gas by coal gasification.

According to the present method of producing iron carbide, if carbon is added to the reaction gas of the second stage reaction process (gas containing mainly methane), the basic reaction of the second stage reaction process is stoichiometrically represented as shown in the following reaction formula (2).

$$6FeO_{1/3} + C + CH_4 \rightarrow 2Fe_3C + 2H_2O \tag{2}$$

In this case, if carbon-containing gas (CO gas) is added in place of carbon, the basic reaction of the second stage reaction process is stoichiometrically represented as shown in the following reaction formula (3).

$$6FeO_{1/3} + CO + CH_4 + H_2 \rightarrow 2Fe_3C + 3H_2O \tag{3}$$

In comparison of the reaction formula (1) with the reaction formula (2) or (3), the following matters are clearly shown. When no gas is added to the reaction gas of the second stage reaction process (formula (1)), two-thirds mole of water vapor is generated per one mole of iron oxide.

But, if carbon is added to the reaction gas of the second stage reaction process (formula (2)), only one-thirds mole of water vapor is generated per one mole of iron oxide. Furthermore, if carbon-containing gas (CO gas) is added to the reaction gas of the second stage reaction process (formula (3)), only a half mole of water vapor is generated per one mole of iron oxide.

Thus, it is possible to decrease the quantity of water vapor which is generated during further reducing and carburizing the partially reduced iron-containing raw material by adding carbon or carbon-containing gas to the reaction gas of the second stage reaction process, and so the carbon potential in the reaction system is raised. As a result, it is possible to accelerate the generation of iron carbide.

Charcoal fines or soot can be obtained by extracting from wash water used in an exhaust gas wet scrubber or cooling water used in a gas cooling system of the above reactors using oil.

One example of the exhaust gas compositions (volume %) of the reactors comprising a carbon-containing gas as the reaction gas is shown in the following table 1. It is preferable to use the reaction gas whose composition is obtained by removing carbon dioxide, oxygen, hydrogen and nitrogen from the gas compositions set forth in table 1.

Table 1

|  | coke oven gas | blast furnace gas | melting reduction furnace gas | electric furnace gas |
| --- | --- | --- | --- | --- |
| $CO_2$ | 2.5% | 12% | 6.5% | 10~20% |
| CmHn | 3.0% |  |  |  |
| $O_2$ | 0.7% |  | 0.3% |  |
| CO | 9.9% | 27% | 23.4% | 70~85% |
| $H_2$ | 52.1% | 2% | 2.1% | 5~12% |
| $CH_4$ | 27.3% |  |  |  |
| $N_2$ | 4.5% | 60% | 67.7% | 1~2% |

As is apparent from the above, the present invention has the following advantages.

That is, it is possible to accelerate the generation of iron carbide in a method of producing iron carbide comprising partially reducing an iron-containing raw material in a first stage reaction process, and subsequently, further reducing and carburizing the partially reduced iron-containing raw material in a second stage reaction process to form the iron carbide.

Especially, in accordance with the third aspect of the present invention, it is possible to perform the saving of energy by utilizing the exhaust gas of the respective reactors.

[ Brief Description of Drawings ]

Figure 1 is a schematic diagram illustrating an apparatus suitable for producing iron carbide according to one embodiment of the present invention.

Figure 2 is a graph illustrating the percentage of iron carbide contained in iron carbide product per hour depending on the quantity of carbon-containing gas (carbon monoxide and carbon dioxide) added to the reaction gas of the second stage reaction process.

[ Best Mode for Carrying Out the Invention ]

Hereafter, an embodiment of an apparatus for producing iron carbide in accordance with the present invention is explained together with the production process.

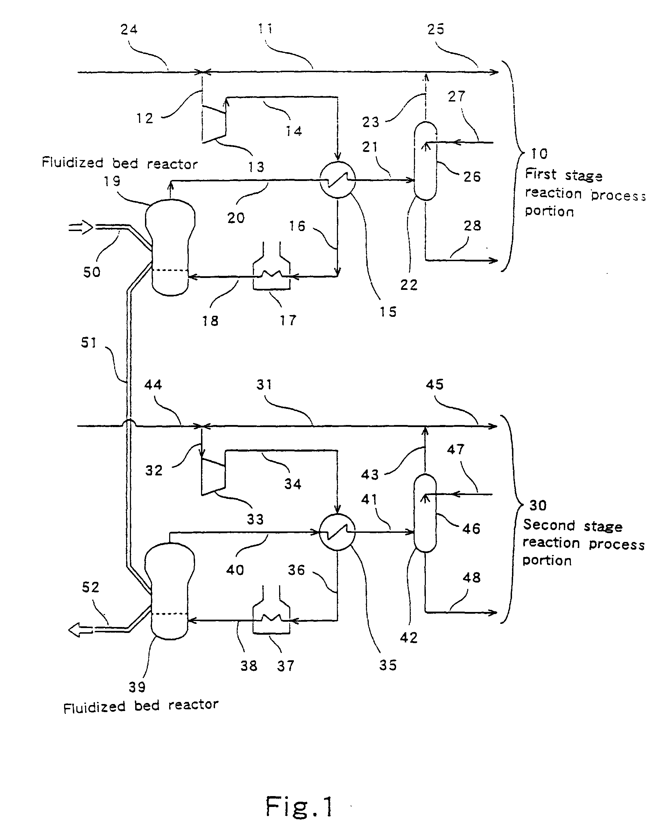

Figure 1 is a schematic diagram illustrating an apparatus suitable for producing iron carbide according to one embodiment of the present invention.

As shown in Figure 1, an apparatus of this embodiment comprises a first stage reaction process portion 10 for conducting a partial reducing reaction of iron ore containing mainly hematite as the iron-containing raw material for iron making and a second stage reaction process portion 30 for conducting the remaining reducing reaction and a carburizing reaction.

With respect to the gas flow through the first stage reaction process portion 10, lines 11 and 12, compressor 13, line 14, heat exchanger 15, line 16, heater 17, line 18, fluidized bed reactor 19, line 20, heat exchanger 15, line 21, scrubber 22 and line 23 form a loop. That is, a reaction gas is introduced near the bottom of the fluidized bed reactor 19, such as through a gas inlet, via line 12, compressor 13, line 14, heat exchanger 15, line 16, heater 17 and line 18 in order. The reaction gas exits from near the top of the fluidized bed reactor 19, through line 20, heat exchanger 15, line 21, scrubber 22, line 23, line 11 and line 12 to form a loop for circulating the first stage reaction gas. Furthermore, a gas having a predetermined composition can be supplied to the loop through line 24 connected at a conjunction between line 11 and line 12, and a predetermined amount of gas can be exhausted from the loop through line 25 connected at a conjunction between line 11 and line 23. The feed gas and exhaust gas are adjusted to maintain a constant composition of reaction gas flowing into the fluidized bed reactor 19, thereby preventing a change in gas composition and a decrease in reaction speed. Scrubber 22 comprises a hollow body 26, line 27 for spraying water into the gas, and line 28 for discharging water from body 26. In scrubber 2 2, a gas exiting from the fluidized bed reactor 19 is cooled and steam present in the gas is condensed for removal.

In addition, the flow of the reaction gas through the second stage reaction process portion 30 is identical to the flow of the reaction gas through the first stage reaction process portion 10. The reference numbers for the second stage reaction process portion 30 are obtained by adding 20 to the reference number of corresponding elements in the first stage reaction process portion 10. An explanation of the elements and their function of the second stage reaction process portion 30 is set forth above with respect to the first stage reaction process portion 10.

In the apparatus for producing iron carbide having the above constitution, iron ore fines are continuously supplied to the upper portion of the fluidizied bed reactor 19 of the first stage reaction process portion 10 via line 50, and the iron ore which has been subjected to a partial reducing reaction in reactor 19 is allowed to flow continuously from the bottom portion of the fluidized bed reactor 19 to the fluidized bed reactor 39 of the second stage reaction process portion 30 via line 51. The remaining reducing reaction and the carburizing reaction are performed in the fluidized bed reactor 39 and the iron carbide product is continuously discharged through line 52.

Regarding the gas composition used in the respective first and second stages, the first stage reaction process is performed using a reducing gas containing mainly hydrogen because only the reducing reaction is occurring, and the second stage reaction process is performed using a gas mixture containing mainly hydrogen and methane because the reducing and carburizing reactions are occurring.

Next, one embodiment of the method for producing iron carbide according to the present invention is explained as follows.

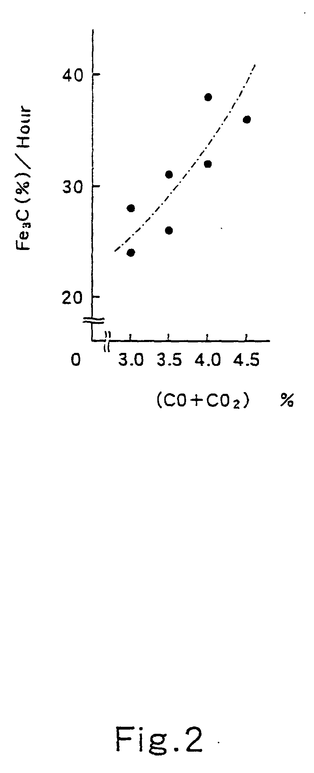

The reaction temperature of the second stage reaction process was in the range of 610 to 650°C, and the reaction pressure of the second stage reaction process was in the range of 3 to 6 atmospheric pressure (i. e., about 2 to 5 kg/cm$^2$ • gauge). When a carbon- containing gas (carbon monoxide and carbon dioxide) was added to a circulating gas of the second stage reaction process via line 44 to perform the second stage reaction process, a comparative test of the percentage of iron carbide contained in iron carbide product per hour, depending on the quantity of carbon-containing gas (carbon monoxide and carbon dioxide) added to the reaction gas of the second stage reaction process, was performed. The result of the test is shown in Figure 2. As shown in Figure 2, it is possible to accelerate the generation of iron carbide by increasing the quantity of carbon-containing gas added to the reaction gas of the second stage reaction process.

[ Industrial Applicability ]

Since the present invention has the above constituent, the present invention is suitable for an apparatus which can accelerate the generation of iron carbide in the apparatus of producing iron carbide comprising partially reducing an iron-containing raw material in a first stage reaction process, and subsequently, further reducing and carburizing the partially reduced iron-containing raw material in a second stage reaction process to form the iron carbide.

## Claims

1. A method for producing iron carbide comprising partially reducing an iron-containing raw material in a first stage reaction process, and subsequently further reducing and carburizing the partially reduced iron-containing raw material in a second stage reaction process to form the iron carbide, wherein carbon, carbon-containing gas or the mixture thereof is added to a reaction gas of the second stage reaction process.

2. The method of claim 1 wherein carbon is charcoal fines or soot.

3. The method of claim 1 wherein carbon-containing gas is a coke oven gas, a blast furnace exhaust gas, an electric furnace exhaust gas, a melting reduction furnace exhaust gas, a converter exhaust gas or a gas by coal gasification.

Fig.1

Fig.2

## INTERNATIONAL SEARCH REPORT

| International application No. |
| --- |
| PCT/JP98/05281 |

| A. CLASSIFICATION OF SUBJECT MATTER |
| --- |
| Int.Cl⁶ C01B31/30, C21B15/00 |
| According to International Patent Classification (IPC) or to both national classification and IPC |

| B. FIELDS SEARCHED |
| --- |
| Minimum documentation searched (classification system followed by classification symbols)<br>Int.Cl⁶ C01B31/30, C21B15/00 |
| Documentation searched other than minimum documentation to the extent that such documents are included in the fields searched<br>Jitsuyo Shinan Koho 1926–1996 Toroku Jitsuyo Shinan Koho 1994–1998<br>Kokai Jitsuyo Shinan Koho 1971–1998 Jitsuyo Shinan Toroku Koho 1996–1998 |
| Electronic data base consulted during the international search (name of data base and, where practicable, search terms used) |

C. DOCUMENTS CONSIDERED TO BE RELEVANT

| Category* | Citation of document, with indication, where appropriate, of the relevant passages | Relevant to claim No. |
| --- | --- | --- |
| X | JP, 09-278428, A (Nippon Steel Corp.),<br>28 October, 1997 (28. 10. 97),<br>Par. Nos. [0005], [0006], [0022] to [0025] ;<br>Table 3, Nos. ⑤, ⑥ (Family: none) | 1 |
| Y | JP, 09-278428, A (Nippon Steel Corp.),<br>28 October, 1997 (28. 10. 97),<br>Par. Nos. [0005], [0006], [0022] to [0025] ;<br>Table 3, Nos. ⑤, ⑥ (Family: none) | 2, 3 |
| X | JP, 09-048604, A (Kawasaki Heavy Industries,Ltd.,<br>et al.),<br>18 February, 1997 (08. 02. 97),<br>Claims 1, 5, 13 ; Par. Nos. [0065] to [0068], [0082]<br>& EP, 837034, A1 & WO, 96/38379, A1<br>& US, 5837031, A & AU, 695225, B | 1 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search<br>12 February, 1999 (12. 02. 99) | Date of mailing of the international search report<br>23 February, 1999 (23. 02. 99) |
| --- | --- |
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

| International application No. |
|---|
| PCT/JP98/05281 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 09-048604, A (Kawasaki Heavy Industries,Ltd., et al.), 18 February, 1997 (08. 02. 97), Claims 1, 5, 13 ; Par. Nos. [0065] to [0068], [0082] & EP, 837034, A1 & WO, 96/38379, A1 & US, 5837031, A & AU, 695225, B | 2, 3 |
| Y | JP, 06-501983, A (Iron Carbide Holdings Ltd.), 3 March, 1994 (03. 03. 94), Page 3, upper right column, lines 6 to 11 ; page 8, upper right column, line 12 to lower left column, line 3 ; page 9, upper left column, lines 2 to 5 & WO, 92/2646, A & EP, 542885, B1 & US, 5137566, A & AU, 658146, B | 3 |
| Y | JP, 53-062717, A (Hazen Research Inc.), 5 June, 1978 (05. 06. 78), Claims 1, 3, 6, 7, 10 & US, 4053301, A & CA, 1099520, A & DE, 2700427, A | 2, 3 |

Form PCT/ISA/210 (continuation of second sheet) (July 1992)